# EUROPÄISCHE PATENTSCHRIFT

(11) **EP 1 113 164 B1**
(45) Veröffentlichungstag und Bekanntmachung des Hinweises auf die Patenterteilung: **22.03.2006**
(21) Anmeldenummer: 00125721.1
(22) Anmeldetag: 24.11.2000
(51) Int. Cl.: F02M 37/22

(54) **Filtervorrichtung für ein Kraftstoffversorgungssystem einer Brennkraftmaschine eines Kraftfahrzeugs**
Filter for a fuel supply system of a combustion engine of a vehicle
Filtre pour le système d'alimentation en carburant d'un moteur à combustion d'un véhicule

(30) Priorität: 28.12.1999 DE 19963388
(43) Veröffentlichungstag der Anmeldung: 04.07.2001
(73) Patentinhaber: ROBERT BOSCH GMBH, 70442 Stuttgart (DE)
(72) Erfinder: Schueler, Peter, 71229 Leonberg (DE)

(56) Entgegenhaltungen:
- DE-A- 19 536 084
- DE-A- 19 753 611
- US-A- 4 539 108
- US-A- 4 556 077
- US-A- 5 078 167
- US-A- 5 195 494
- US-A- 5 989 413

## Beschreibung

### Stand der Technik

Die Erfindung geht aus von einer Filtervorrichtung für ein Kraftstoffversorgungssystem einer Brennkraftmaschine eines Kraftfahrzeugs nach der Gattung des Anspruchs 1.

Eine solche Filtervorrichtung ist durch die US 5,078,167 bekannt. Diese Filtervorrichtung weist ein Gehäuse auf, in dem ein Filtereinsatz angeordnet ist. Die Filtervorrichtung weist einen schmutzseitigen Zulauf von einem Kraftstoffvorratsbehälter des Kraftfahrzeugs und einen sauberseitigen Ablauf zur Brennkraftmaschine auf. Außerdem weist die Filtervorrichtung einen von der Schmutzseite abführenden Rücklauf zum Kraftstoffvorratsbehälter auf, der durch eine Ventileinrichtung gesteuert wird. Die Ventileinrichtung weist eine vom Kraftstoffdruck auf der Sauberseite der Filtervorrichtung beaufschlagte bewegliche Wand in Form einer Membran auf. Durch die Ventileinrichtung wird der Rücklauf geschlossen gehalten, bis der Kraftstoffdruck auf der Sauberseite einen vorgegebenen Wert überschreitet, wodurch die Membran verformt wird und den Rücklauf freigibt. Die Ventileinrichtung weist einen aufwendigen Aufbau mit einem durch die Membran beweglichen Ventilsitz auf. Außerdem ist die Ventileinrichtung quer am Gehäuse der Filtereinrichtung angeflanscht und erfordert einen großen Bauraum. Der Aufbau und Bauraum der Filtereinrichtung werden durch die Ventileinrichtung entsprechend nachteilig beeinflußt.

### Vorteile der Erfindung

Die erfindungsgemäße Filtervorrichtung mit den Merkmalen gemäß Anspruch 1 hat demgegenüber den Vorteil, daß der Aufbau der Ventileinrichtung vereinfacht ist und außerdem der Bauraum reduziert ist, so daß die Filtervorrichtung entsprechend einfacher und mit geringerem Bauraum herstellbar ist.

In den abhängigen Ansprüchen sind vorteilhafte Ausgestaltungen und Weiterbildungen der erfindungsgemäßen Filtervorrichtung angegeben. Die Ausbildung gemäß Anspruch 2 ermöglicht einen besonders einfachen Aufbau der Ventileinrichtung für die kein separates Ventilglied erforderlich ist. Durch die Weiterbildung gemäß Anspruch 7 wird ein Zusetzen des Filtereinsatzes bei niedrigen Temperaturen vermieden, wobei die Heizleistung nur auf die tatsächlich durch den Filtereinsatz hindurchtretende Kraftstoffmenge ausgelegt zu werden braucht.

### Zeichnung

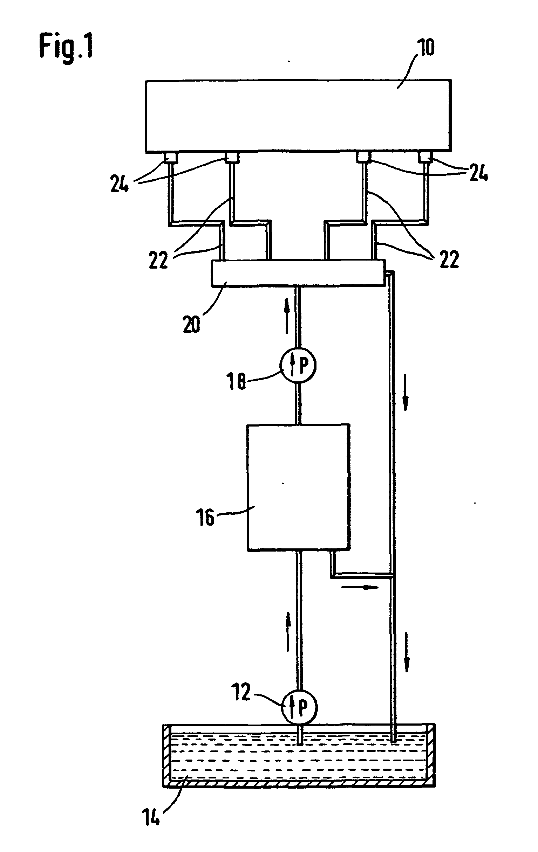

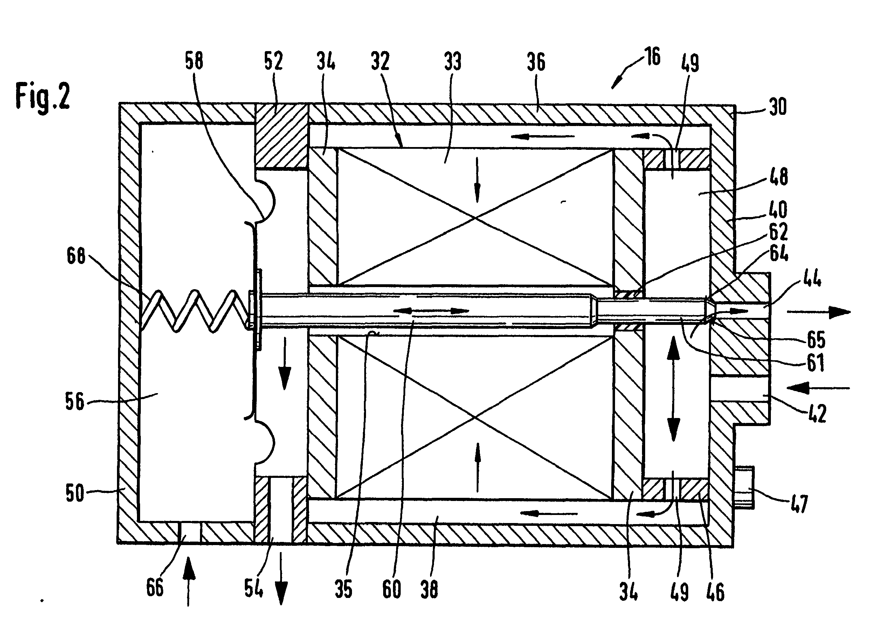

Ein Ausführungsbeispiel der Erfindung ist in der Zeichnung dargestellt und in der nachfolgenden Beschreibung näher erläutert. Es zeigen Figur 1 in vereinfachter, schematischer Darstellung ein Kraftstoffversorgungssystem einer Brennkraftmaschine eines Kraftfahrzeugs mit einer Filtervorrichtung und Figur 2 die Filtervorrichtung in vergrößerter Darstellung in einem Längsschnitt.

### Beschreibung des Ausführungsbeispiels

In Figur 1 ist ein Kraftstoffversorgungssystem einer Brennkraftmaschine eines Kraftfahrzeugs dargestellt. Die Brennkraftmaschine 10 ist vorzugsweise eine selbstzündende Brennkraftmaschine, ein Dieselmotor. Das Kraftstoffversorgungssystem weist ein Förderaggregat 12 auf, durch das Kraftstoff aus einem Kraftstoffvorratsbehälter 14 gefördert wird. Der vom Förderaggregat 12 geförderte Kraftstoff durchströmt eine Filtervorrichtung 16, die nachfolgend noch näher erläutert wird. Der Kraftstoff wird nach Durchströmung der Filtervorrichtung 16 einer Hochdruckpumpe 18 zugeführt. Die Hochdruckseite der Hochdruckpumpe 18 ist mit einem Hochdruckspeicher 20 in Form eines Rails verbunden, von dem zu jedem Zylinder der Brennkraftmaschine 10 eine Leitung 22 zu einem Injektor 24 abführt.

Anhand der Figur 2 wird nachfolgend der Aufbau der Filtervorrichtung 16 näher erläutert. Die Filtervorrichtung 16 weist ein Gehäuse 30 auf, das beispielsweise etwa topfförmig ausgebildet ist. Im Gehäuse 30 ist ein Filtereinsatz 32 angeordnet, der zumindest annähernd hohlzylinderförmig ausgebildet ist in Form einer Filterpatrone. Der Filtereinsatz 32 weist ein Filtergewebe 33 auf, das an seinen beiden axial weisenden Stirnenden jeweils mit einer ringförmigen Abdeckung 34 versehen ist. Der Filtereinsatz 32 weist eine zentrale Durchgangsöffnung 35 auf, die vom Filtergewebe 33 etwa koaxial umgeben ist. Zwischen dem Außenmantel des Filtereinsatzes 32 und der diesen umgebenden Wand 36 des Gehäuses 30 ist ein Ringraum 38 gebildet.

Das Gehäuse 30 weist einen der Abdeckung 34 des Filtereinsatzes 32 gegenüberliegenden Boden 40 auf. Im Boden 40 des Gehäuses 30 ist eine Öffnung 42 ausgebildet, die einen Zulauf für den vom Förderaggregat 12 aus dem Kraftstoffvorratsbehälter 14 geförderten Kraftstoff bildet. Im Boden 40 des Gehäuses 30 ist außerdem eine weitere Öffnung 44 ausgebildet, an die ein Rücklauf von der Filtervorrichtung 16 zum Kraftstoffvorratsbehälter 14 angeschlossen ist. Die Öffnung 44 ist zumindest annähernd koaxial zur Durchgangsöffnung 35 des Filtereinsatzes 32 angeordnet.

Zwischen dem Boden 40 des Gehäuses 30 und der diesem gegenüberliegenden Abdeckung 34 des Filtereinsatzes 32 ist eine zumindest annähernd hohlzylinderförmige Heizvorrichtung 46 angeordnet. Die Heizvorrichtung 46 weist zumindest annähernd denselben Außenquerschnitt auf wie der Filtereinsatz 32. Die Heizvorrichtung 46 besteht zumindest teilweise aus elektrisch leitfähigem Material, insbesondere Metall. Die Heizvorrichtung 46 ist mit einem an der Außenseite des Gehäuses 30 liegenden elektrischen Anschluß 47 verbunden, wobei die Heizvorrichtung 46 bei Stromfluß erwärmt wird. Der durch die Öffnung 42 im Boden 40 des Gehäuses 30 zufließende Kraftstoff gelangt in einen durch den Boden 40, die Abdeckung 34 des Filtereinsatzes 32 und die Heizvorrichtung 46 begrenzten Raum 48. Die Heizvorrichtung 46 weist über ihren Umfang verteilt eine Vielzahl von Öffnungen 49 auf, durch die Kraftstoff aus dem Raum 48 in den Ringraum 38 gelangen kann. Der Filtereinsatz 32 stützt sich über die Heizvorrichtung 46 am Boden 40 des Gehäuses 30 ab.

Die offene Seite des Gehäuses 30 ist mit einem Deckel 50 verschlossen, wobei zwischen dem Gehäuse 30 und dem Deckel 50 eine Zwischenplatte 52 angeordnet ist. Die Zwischenplatte 52 weist einen kleineren Innenquerschnitt auf als das Gehäuse 30, so daß die Zwischenplatte 52 an der Abstützung 34 des Filtereinsatzes 32 angreift und der Filtereinsatz 32 zwischen der Heizvorrichtung 46 einerseits und der Zwischenplatte 52 andererseits in Richtung seiner Längsachse fixiert ist. Zwischen der Abdeckung 34 des Filtereinsatzes 32 und der Zwischenplatte 52 ist eine Abdichtung vorgesehen, um zu verhindern, daß Kraftstoff vom Ringraum 38 her hindurchtreten kann. In der Zwischenscheibe 52 ist eine Öffnung 54 ausgebildet, an die ein Ablauf zur Hochdruckpumpe 18 angeschlossen ist.

Über den Zulauf durch die Öffnung 42 in den Raum 48 zufließender Kraftstoff gelangt durch die Öffnungen 49 in der Heizvorrichtung 46 in den Ringraum 38 und tritt durch das Filtergewebe 33 des Filtereinsatzes 32 radial nach innen in die Durchgangsöffnung 35 und strömt von dort durch die Zwischenplatte 52 über deren Öffnung 54 zur Hochdruckpumpe 18 ab. Der Raum 48 und der Ringraum 38 sind auf der Schmutzseite der Filtervorrichtung 16 angeordnet und die Durchgangsöffnung 35 und der Innenraum der Zwischenplatte 52 sind auf der Sauberseite der Filtervorrichtung 16 angeordnet. Zur Steuerung des Rücklaufs, das ist die Öffnung 44 auf der Schmutzseite der Filtervorrichtung 16, ist eine Ventileinrichtung vorgesehen, die vom Kraftstoffdruck auf der Sauberseite der Filtervorrichtung 16 gesteuert wird.

Die Ventileinrichtung weist eine einen Raum 56 zwischen der Zwischenplatte 52 und dem Deckel 50 begrenzende bewegliche Wand 58 auf. Die bewegliche Wand 58 kann beispielsweise durch eine Membran gebildet sein, die zwischen der Zwischenplatte 52 und dem Deckel 50 eingespannt ist. Mit der Membran 58 ist als weiteres Teil der Ventileinrichtung eine Stange 60 verbunden, die zumindest annähernd koaxial zur Durchgangsöffnung 35 des Filtereinsatzes 32 verläuft und durch diese hindurchtritt bis in den Raum 48 auf der Schmutzseite der Filtervorrichtung 16. Die Stange 60 kann im Durchmesser gestuft ausgebildet sein und vor deren Durchtritt durch die den Raum 48 begrenzende Abdeckung 34 des Filterseinsatzes 32 in einen im Durchmesser kleineren Abschnitt 61 übergehen. Zwischen der Stange 60 und der Durchgangsöffnung 35 der Abdeckung 34 ist eine Abdichtung vorgesehen, mittels eines zwischen der Stange 60 und der Durchgangsöffnung 35 eingespannten elastischen Dichtelements 62. Durch das Dichtelement 62 wird die Sauberseite der Filtervorrichtung 16 sicher von der Schmutzseite getrennt.

Das in den Raum 48 ragende Ende der Stange 60 dient als Ventilglied, durch das die Öffnung 44 im Boden 40 des Gehäuses 30 verschließbar ist und somit der von der Öffnung 44 zum Kraftstoffvorratsbehälter 14 abführende Rücklauf steuerbar ist. Die Stange 60 kann an ihrem Ende eine als Dichtfläche wirkende Anschrägung 64 aufweisen und/oder die Öffnung 44 kann an ihrem Rand eine als Ventilsitz wirkende Anschrägung 65 aufweisen, so daß eine sichere Abdichtung der Öffnung 44 durch das Ende der Stange 60 erreicht wird. Durch das Dichtelement 62 wird eine Führung der Stange 60 erreicht, so daß diese zumindest annähernd koaxial in der Durchgangsöffnung 35 des Filtereinsatzes 32 und zumindest annähernd koaxial zur Öffnung 44 im Boden 40 des Gehäuses 30 angeordnet und verschiebbar geführt ist. Durch das Dichtelement 62 wird außerdem eine Reibkraft auf die Stange 60 erzeugt, durch die die Bewegung der Stange 60 gedämpft wird. Hierdurch werden durch Druckschwingungen angeregte verschiebebewegungen der Stange 60 gedämpft und damit verhindert oder zumindest abgeschwächt.

Die Membran 58 ist auf ihrer dem Filtereinsatz 32 zugewandten Seite vom Kraftstoffdruck auf der Sauberseite der Filtervorrichtung 16 beaufschlagt. Auf ihrer anderen Seite ist die Membran 58 von einem Referenzdruck beaufschlagt. Der Raum 56 kann beispielsweise durch eine Öffnung 66 im Deckel 50 mit der Umgebung verbunden sein, so daß der auf die Membran 58 wirkende Referenzdruck der Umgebungsluftdruck ist. Alternativ kann der Raum 56 über die Öffnung 66 auch mit einem Rücklauf zum Kraftstoffvorratsbehälter 14 verbunden sein, so daß der auf die Membran 58 wirkende Referenzdruck der Kraftstoffdruck im Rücklauf ist. Es kann vorgesehen sein, daß im Raum 56 außerdem eine Feder 68 angeordnet ist, durch die die Membran 58 zusätzlich zum Referenzdruck beaufschlagt wird. Die Feder 68 ist dabei zwischen dem Deckel 50 und der Membran 58 eingespannt.

Nachfolgend wird die Funktion der Filtervorrichtung 16 erläutert. Solange der Kraftstoffdruck auf der Sauberseite der Filtervorrichtung 16 auf die Membran 58 eine geringere Kraft erzeugt als der Referenzdruck im Raum 56 sowie die Feder 68, wird durch den Referenzdruck und die Feder 68 die Stange 60 mit ihrer Dichtfläche 64 in den Ventilsitz 65 am Rand der Öffnung 44 gepresst, so daß die Öffnung 44 und damit der Rücklauf zum Kraftstoffvorratsbehälter 14 geschlossen ist. Die gesamte durch die Öffnung 42 der Filtervorrichtung 16 zufließende Kraftstoffmenge tritt dabei durch den Filtereinsatz 32 hindurch und durch die Öffnung 54 in der Zwischenplatte 52 wieder aus der Filtervorrichtung 16 zur Hochdruckpumpe 18 aus. Der Kraftstoffbedarf der Hochdruckpumpe 18 ist nicht konstant, sondern abhängig von verschiedenen Betriebsparametern der Brennkraftmaschine. Wenn der Kraftstoffbedarf der Hochdruckpumpe 18 sinkt, so nimmt der Kraftstoffdruck auf der Sauberseite der Filtervorrichtung 16 zu. Wenn der Kraftstoffdruck auf der Sauberseite der Filtervorrichtung 16 einen vorgegebenen Wert überschreitet, so wird die durch diesen auf die Membran 58 ausgeübte Kraft größer als die durch den Referenzdruck und die Feder 68 ausgeübte Kraft, so daß die Membran 58 und zusammen mit dieser die Stange 60 zum Deckel 50 hin verschoben wird. Dabei hebt die Stange 60 mit ihrer Dichtfläche 64 vom Ventilsitz 65 ab, so daß die Öffnung 44 und der Rücklauf zum Kraftstoffvorratsbehälter 14 geöffnet wird. Es tritt dann nur noch ein Teil des der Filtervorrichtung 16 durch die Öffnung 42 zufließenden Kraftstoffs durch den Filtereinsatz 32 hindurch während ein anderer Teil direkt durch die Öffnung 44 und den Rücklauf in den Kraftstoffvorratsbehälter 14 zurückfließt. Dies ist insbesondere bei tiefen Temperaturen vorteilhaft, da dann die Heizleistung der Heizvorrichtung 46 nur auf die der Hochdruckpumpe 18 tatsächlich zuzuführende und den Filtereinsatz 32 durchströmende Kraftstoffmenge ausgelegt zu werden braucht und nicht auf die gesamte der Filtervorrichtung 16 zugeführte Kraftstoffmenge. Die Heizvorrichtung 46 kann temperaturabhängig gesteuert sein, so daß diese bei Unterschreiten einer vorgegebenen Temperatur eingeschaltet wird, um eine Verdickung des Kraftstoffs und eine hierdurch verursachte Zusetzung des Filtereinsatzes 32 zu vermeiden.

Abweichend von der vorstehend beschriebenen Ausführung kann auch vorgesehen sein, daß die Stange 60 nicht selbst als Ventilglied zur Steuerung der Öffnung 44 dient, sondern auf der Schmutzseite der Filtervorrichtung 16 im Raum 48 ein separates Ventilglied angeordnet ist, das von der Stange 60 betätigt wird.

## Patentansprüche

1. Filtervorrichtung für ein Kraftstoffversorgungssystem einer Brennkraftmaschine eines Kraftfahrzeugs mit einem Gehäuse (30,50,52), in dem ein Filtereinsatz (32) angeordnet ist, mit einem scharutzseitig mündenden Zulauf (42) von einem Kraftstoffvorratsbehälter (14), mit einem sauberseitig abführenden Ablauf (54) zur Brennkraftmaschine (10), mit einem schmutzseitig abführenden Rücklauf (44) zum Kraftstoffvorratsbehälter (14), der durch eine Ventileinrichtung gesteuert wird, die eine vom Kraftstoffdruck auf der Sauberseite der Filtervorrichtung (16) beaufschlagte bewegliche Wand (58) aufweist und durch die der Rücklauf (44) geschlossen gehalten wird, bis der Kraftstoffdruck auf der Sauberseite einen vorgegebenen Wert überschreitet, wonach der Rücklauf (44) durch die Ventileinrichtung freigegeben wird, **dadurch gekennzeichnet, daß** die Ventileinrichtung eine durch die bewegliche Wand (58) verschiebbare Stange (60) aufweist, die durch den Filtereinsatz (32) von der Sauberseite zur Schmutzseite hindurchtritt und durch deren auf der Schmutzseite angeordneten Endbereich der Rücklauf (44) gesteuert wird.

2. Filtervorrichtung nach Anspruch 1, **dadurch gekennzeichnet, daß** der Endbereich der Stange (60) als Dichtfläche (64) ausgebildet ist und mit einem eine Öffnung (44) des Rücklaufs umgebenden Ventilsitz (65) zusammenwirkt.

3. Filtervorrichtung nach Anspruch 1 oder 2, **dadurch gekennzeichnet, daß** der Filtereinsatz (32) zumindest annähernd hohlzylinderförmig ausgebildet ist mit einer zentralen Durchgangsöffnung (35), durch die die Stange (60) hindurchtritt.

4. Filtervorrichtung nach einem der Ansprüche 1 bis 3, **dadurch gekennzeichnet, daß** die bewegliche Wand (58) auf ihrer anderen Seite, die der vom Kraftstoffdruck auf der Sauberseite beaufschlagten Seite gegenüberliegt, von einem Referenzdruck beaufschlagt ist.

5. Filtervorrichtung nach einem der Ansprüche 1 bis 4, **dadurch gekennzeichnet, daß** die bewegliche Wand (58) auf ihrer anderen Seite, die der vom Kraftstoffdruck auf der Sauberseite beaufschlagten Seite gegenüberliegt, von einem federnden Element (68) beaufschlagt ist.

6. Filtervorrichtung nach einem der vorstehenden Ansprüche, **dadurch gekennzeichnet, daß** zwischen dem Filtereinsatz (32) und der Stange (60) ein elastisches Dichtelement (62) eingespannt ist, über das die Stange (60) verschiebbar geführt ist.

7. Filtervorrichtung nach Anspruch 6, **dadurch gekennzeichnet, daß** durch das Dichtelement (62) eine Reibkraft auf die Stange (60) erzeugt wird, durch die eine Verschiebebewegung der Stange (60) gedämpft wird.

8. Filtervorrichtung nach einem der vorstehenden Ansprüche, **dadurch gekennzeichnet, daß** diese eine auf der Schmutzseite angeordnete Heizvorrichtung (46) aufweist.

## Claims

1. Filter device for a fuel supply system of an internal combustion engine of a motor vehicle, with a housing (30, 50, 52) in which a filter insert (32) is arranged, with an inflow (42), issuing on the dirty side, from a fuel storage tank (14), with an outflow (54), leading away on the clean side, to the internal combustion engine (10), and with a return (44), leading away on the dirty side, to the fuel storage tank (14), the said return being controlled by a valve device which has a movable wall (58) acted upon by the fuel pressure on the clean side of the filter device (16) and by means of which the return (44) is kept closed until the fuel pressure on the clean side exceeds a predetermined value, after which the return (44) is released by means of the valve device, **characterized in that** the valve device has a rod (60) which is displaceable by means of the movable wall (58) and which passes through the filter insert (32) from the clean side to the dirty side and whose end region arranged on the dirty side controls the return (44).

2. Filter device according to Claim 1, **characterized in that** the end region of the rod (60) is designed as a sealing surface (64) and cooperates with a valve seat (65) surrounding an orifice (44) of the return.

3. Filter device according to Claim 1 or 2, **characterized in that** the filter insert (3) is of at least approximately hollow-cylindrical design, with a central passage orifice (35) through which the rod (60) passes.

4. Filter device according to one of Claims 1 to 3, **characterized in that** the movable wall (58) is acted upon by a reference pressure on its other side which lies opposite the side acted upon by the fuel pressure on the clean side.

5. Filter device according to one of Claims 1 to 4, **characterized in that** the movable wall (58) is acted upon by a resilient element (68) on its other side which lies opposite the side acted upon by the fuel pressure on the clean side.

6. Filter device according to one of the preceding claims, **characterized in that** an elastic sealing element (62), via which the rod (60) is guided displaceably, is clamped between the filter insert (32) and the rod (60).

7. Filter device according to Claim 6, **characterized in that** the sealing element (62) generates on the rod (60) a frictional force which damps a displacement movement of the rod (60).

8. Filter device according to one of the preceding claims, **characterized in that** it has a heating device (46) arranged on the dirty side.

## Revendications

1. Dispositif filtrant pour un système d'alimentation en carburant d'un moteur à combustion interne d'un véhicule, avec un carter (30, 50, 52) logeant une cartouche filtrante (32) et qui comporte une arrivée (42) du côté sale venant d'un réservoir à carburant (14), une évacuation (54), donnant du côté propre vers le moteur à combustion (10), qui comporte un retour (44) retournant du côté sale vers le réservoir à carburant (14) et commandé par un dispositif de soupape qui présente une paroi mobile (58) soumise à la pression du carburant du côté propre du dispositif filtrant (16), et qui maintient le retour (44) fermé jusqu'à ce que la pression du carburant du côté propre dépasse une valeur prédéfinie, après quoi le retour (44) est débloqué par le dispositif de soupape,
**caractérisé en ce que**
le dispositif de soupape présente une tige (60) coulissant à travers la paroi mobile (58), qui traverse la cartouche filtrante (32) depuis le côté propre vers le côté sale et dont la zone d'extrémité, disposée sur le côté sale, commande le retour (44).

2. Dispositif filtrant selon la revendication 1,
**caractérisé en ce que**
la zone d'extrémité de la tige (60) est en forme de surface d'étanchéité (64) et interagit avec un siège de soupape (65) entourant une ouverture (44) du retour.

3. Dispositif filtrant selon la revendication 1 ou 2,
**caractérisé sen ce que**
la cartouche filtrante (32) est au moins approximativement en forme de cylindre creux avec une ouverture (35) centrale traversée par la tige (60).

4. Dispositif filtrant selon l'une quelconque des revendications 1 à 3,
**caractérisé en ce que**
la paroi mobile (58) est soumise à une pression de référence sur son autre côté qui est opposé au côté soumis à la pression du carburant sur le côté propre.

5. Dispositif filtrant selon l'une quelconque des revendications 1 à 4,
**caractérisé en ce que**
la paroi mobile (58) est soumise à un élément élastique (68) sur son autre côté opposé au côté soumis à la pression du carburant du côté propre.

6. Dispositif filtrant selon l'une quelconque des revendications précédentes,
**caractérisé en ce qu'**
entre la cartouche filtrante (32) et la tige (60), un élément d'étanchéité élastique (62) permet à la tige (60) de coulisser.

7. Dispositif filtrant selon la revendication 6,
**caractérisé en ce que**
l'élément d'étanchéité (62) produit sur la tige (60) une force de frottement permettant d'amortir un mouvement coulissant de la tige (60).

8. Dispositif filtrant selon l'une quelconque des revendications précédentes,
**caractérisé en ce que**
celui-ci présente un dispositif de chauffage (46) disposé du côté sale.
